# EUROPÄISCHE PATENTSCHRIFT

(11) **EP 1 362 763 B1**
(45) Veröffentlichungstag und Bekanntmachung des Hinweises auf die Patenterteilung: **16.01.2008**
(21) Anmeldenummer: 03009586.3
(22) Anmeldetag: 29.04.2003
(51) Int. Cl.: B62B 9/18

(54) **Kinderwagen, insbesondere Rehakinderwagen**
Baby carriage, particularly for rehabilitation
Voiture d'enfant, en particulier pour la rééducation

(30) Priorität: 15.05.2002 DE 10221452
(43) Veröffentlichungstag der Anmeldung: 19.11.2003
(73) Patentinhaber: Otto Bock HealthCare GmbH, 37115 Duderstadt (DE)
(72) Erfinder: Horacek, Gregor, 56235 Ransbach-Baumbach (DE)
(74) Vertreter: Lins, Edgar

(56) Entgegenhaltungen:
- DE-A1- 19 939 634
- FR-A- 2 644 745
- GB-A- 151 495
- US-A- 5 364 119
- US-A- 5 727 802
- US-A- 5 904 398

## Beschreibung

Die Erfinderung betrifft einen Kinderwagen, insbesondere Rehakinderwagen, mit einem sich nach hinten oben, in einem Winkel < 90° zum Boden erstreckenden Vorderrahmen, der zwei nach vorne und unten gerichtete, an ihrem jeweils unteren Ende mit Vorderrädern bestückte Vorderrahmenstreben und an seinem hinteren oberen Ende einen Schiebebügel aufweist, und mit einem sich nach hinten unten erstreckenden Hinterrahmen, der an seinem oberen Ende am Vorderrahmen und/oder an dessen Schiebebügel festgelegt ist und an seinem hinteren unteren Ende mit Hinterrädern bestückt ist.

Ein derartiger, als zusammenklappbarer Schiebestuhl ausgebildeter Kinderwagen lässt sich z. B. der DE 40 04 536 C2 entnehmen. Viele derartige Kinderwagen weisen Federungseinrichtungen zur Stoßdämpfung auf. Hierbei wird im Wesentlichen unterschieden zwischen einer Federung des gesamten Fahrgestell-Grundrahmens gegenüber dem Aufbau mit Sitz, einer Federung der einzelnen Achsen gegenüber dem übrigen Fahrgestell oder aber einer Federung der einzelnen Räder gegenüber dem übrigen Fahrgestell. So zeigt z. B. die DE 199 39 634 A1 einen Kinderwagen mit scherenförmigem Fahrgestell, bei dem die Federung in den Gelenkpunkt der Schere gelegt wurde, so dass es sich um eine Abfederung der Bodenreaktionskräfte handelt.

Die FR 2 644 745 zeigt alle Merkmale des Oberbegriffs des unabhängigen Anspruchs 1.

Bei allen bisherigen Vorschlägen wurde ein Kompromiss gemacht zwischen Komfort für das Kind (maximale Stoßdämpfung) und einem guten Handling (Manövrierbarkeit) des Kinderwagens. Eine zu weiche Federung (hoher Komfort) führt zu schlechtem Handling, eine zu harte Federung (gutes Handling) zu schlechtem Komfort bzw. mangelhafter Stoßdämpfung.

Für den nichtbehinderten Bereich ist eine optimale Abstimmung verhältnismäßig einfach zu erzielen, da der Altersbereich der Kinder, die in einem Kinderwagen gefahren werden, auf wenige Jahre beschränkt ist und daher das zu berücksichtigende Gewichtsspektrum keine großen Differenzen aufweist. Im Behindertenbereich müssen hingegen Kinder in einem Altersbereich zwischen 1 und etwa 12 Jahren im Kinderwagen (später in Rollstühlen oder Sitzschalen mit entsprechenden Untergestellen) gefahren werden. Hieraus ergibt sich ein Gewichtsspektrum von etwa 8 kg bis 40 kg. Eine auf ein 40 kg schweres Kind abgestimmte Federung würde aber so gut wie keine Stoßdämpfung für ein 8 kg schweres Kind bieten, während umgekehrt bei einer Abstimmung auf ein leichtes Gewicht der Federweg allein durch die Gewichtskraft eines 40 kg schweren Kindes verbraucht wäre. Aber gerade im Behindertenbereich, wo durch entsprechende Positionierung und Unterstützung gegen Fehlstellungen und Fehlbelastungen vorgegangen werden muss, sind Stoßbelastungen kontraproduktiv und können in vielen Fällen überhaupt nicht toleriert werden.

Diesem Problem versucht man in der technischen Rehabilitation bisher durch entsprechende Aufpolsterung in Sonderanfertigung zu begegnen. Jedoch ist dieser Effekt oft unzureichend; zudem sind Sonderanfertigungen immer mit extrem hohen Kosten verbunden.

Der Erfindung liegt somit die Aufgabe zugrunde, für den eingangs beschriebenen Kinderwagen, insbesondere Rehakinderwagen eine Federung zu entwickeln, die einerseits eine optimale Stoßdämpfung für das Kind und andererseits eine optimale Manövrierbarkeit des Kinderwagens gewährleistet; Lenk- und Ankippbewegungen sollen dabei immer direkt umgesetzt und nicht durch Schwammigkeit einer zu weichen Federung behindert werden.

Ausgehend von dem eingangs beschriebenen Kinderwagen wird diese Aufgabe erfindungsgemäß gelöst durch eine als Sitzaufnahme dienende oder selbst einen Bestandteil eines Sitzes darstellende Rahmenkonstruktion, die an den beiden Vorderrahmenstreben längsverschieblich geführt ist und sich gegenüber den Vorderrahmenstreben auf zumindest einem Federlager abstützt, dessen Federkraft verstellbar ist.

Bei dem erfindungsgemäß gestalteten Kinderwagen ist somit nur die Sitzeinheit gefedert, wobei die Federung zur Anpassung an das jeweilige Körpergewicht des Kindes einstellbar ist. Die Räder bzw. Achsen bleiben hingegen ungefedert, um eine optimale Manövrierbarkeit zu gewährleisten.

Eine stabile und zugleich wartungsarme Konstruktion ist dann gewährleistet, wenn die Rahmenkonstruktion mit je einem Gleitrohr teleskopförmig auf den Vorderrahmenstreben geführt ist.

Grundsätzlich wäre es möglich, nur ein Federlager zwischen einer Querstrebe der genannten Rahmenkonstruktion und einer die beiden Vorderrahmenstreben miteinander verbindenden Querstrebe vorzusehen. Eine hinsichtlich Konstruktion und Funktion bessere Lösung ist aber erfindungsgemäß dann gegeben, wenn jeder Vorderrahmenstrebe ein Federlager zugeordnet ist, das eine Druckfeder aufweist, die sich mit ihrem unteren Ende an einem Widerlager der Vorderrahmenstreben und mit ihrem oberen Ende an einem Widerlager der Rahmenkonstruktion abstützt, wobei zumindest eines dieser Widerlager hinsichtlich des Längsabstandes zwischen den beiden Widerlagern verstellbar angeordnet und in der gewünschten Position fixierbar ist. Denkbar ist auch ein nur einseitig vorgesehenes Federlager.

Ein verstellbares Widerlager könnte z. B. als Nockenscheibe mit Nocken unterschiedlicher Höhe oder aber als auf den Vorderrahmenstreben und/oder den Gleitrohren verdrehbare Gewindebuchsen ausgebildet sein. Zweckmäßig erscheint hier eine jeweils eine Vorderrahmenstrebe umschließende Verschiebebuchse mit einem Lochbild, das eine Fixierung dieser Buchse gegenüber der Vorderrahmenstrebe in der gewünschten Längsverschiebeposition zulässt. Dadurch lässt sich die Vorspannung der Druckfedern in einfacher Weise dem jeweils aufzunehmenden Gewicht anpassen, um so eine optimale Stoßkompensation zu erzielen.

Es ist ferner zweckmäßig, wenn an jeder Vorderrahmenstrebe ein oberer, die maximale Ausfederung der Rahmenkonstruktion begrenzender Anschlag vorgesehen ist. Bei entsprechender Belastung (Gewicht, Stoßbelastung) bewegt sich die Rahmenkonstruktion gegen die Kraft der beiden Druckfedern auf den Vorderrahmenstreben nach unten, maximal bis zur Blocklage der Druckfedern.

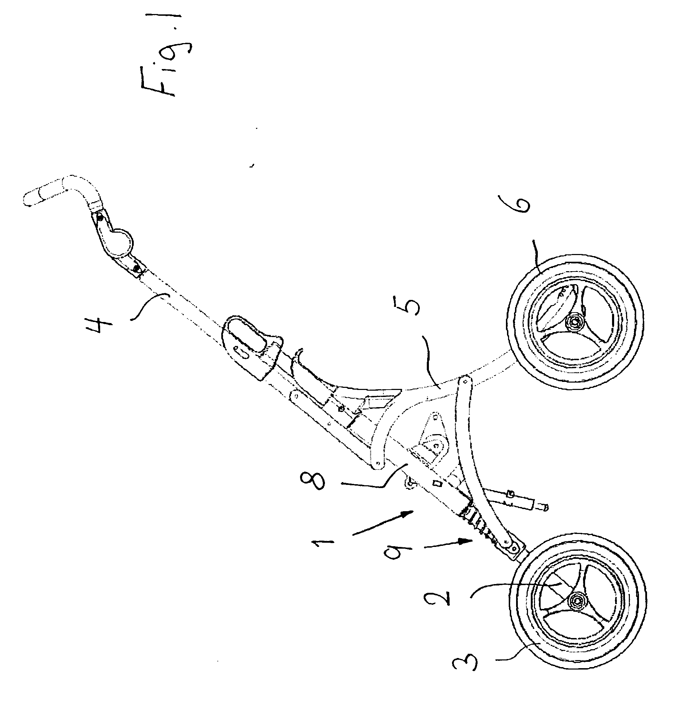

In der Zeichnung ist eine als Beispiel dienende Ausführungsform der Erfindung dargestellt. Es zeigen
- **Figur 1**: einen Kinderwagen in Seitenansicht;

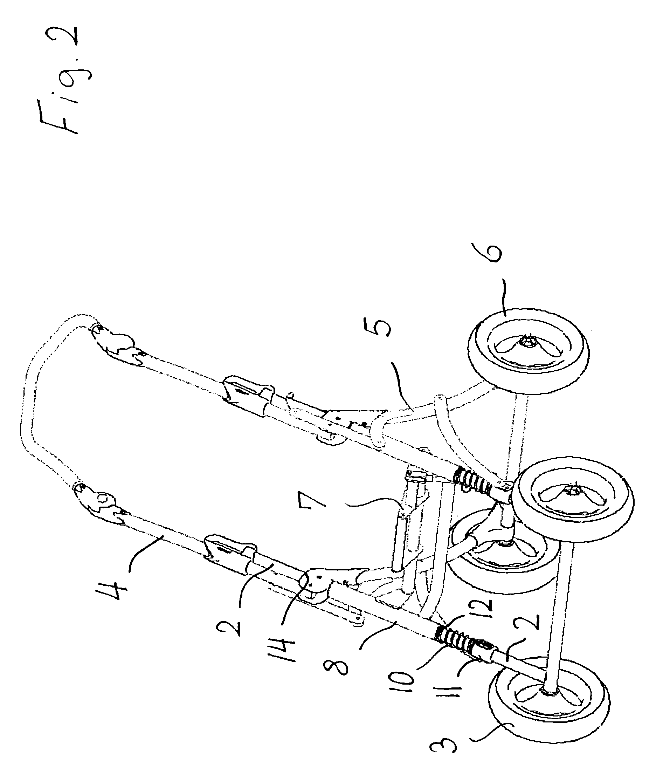

- **Figur 2**: den Kinderwagen gemäß Figur 1 in perspektivischer Vorderansicht und
- **Figur 3**: in vergrößertem Maßstab in perspektivischer Darstellung einen Teilbereich des Kinderwagens gemäß Figur 2.

Der dargestellte Kinderwagen weist einen sich nach hinten oben, in einem Winkel zwischen etwa 35° und 60° zum Boden erstreckenden Vorderrahmen 1 auf, der zwei nach vorne und unten gerichtete Vorderrahmenstreben 2 umfasst, die an ihren unteren Enden mit Vorderrädern 3 bestückt sind. Der Vorderrahmen 1 weist an seinem hinteren oberen Ende einen Schiebebügel 4 auf.

Der Kinderwagen weist ferner einen sich nach hinten unten erstreckenden Hinterrahmen 5 auf, der an seinem oberen Ende am Vorderrahmen 1 und/oder an dessen Schiebebügel 4 festgelegt ist und an seinem hinteren unteren Ende mit Hinterrädern 6 bestückt ist.

Der Kinderwagen kann als zusammenklappbarer Schiebestuhl ausgebildet sein.

Vorgesehen ist ferner eine als Sitzaufnahme dienende oder selbst einen Bestandteil eines Sitzes darstellende Rahmenkonstruktion 7, die mit je einem Gleitrohr 8 teleskopförmig auf den beiden Vorderrahmenstreben 2 längsverschieblich geführt ist und sich gegenüber diesen Vorderrahmenstreben 2 auf je einem Federlager 9 abstützt, dessen Federkraft verstellbar ist.

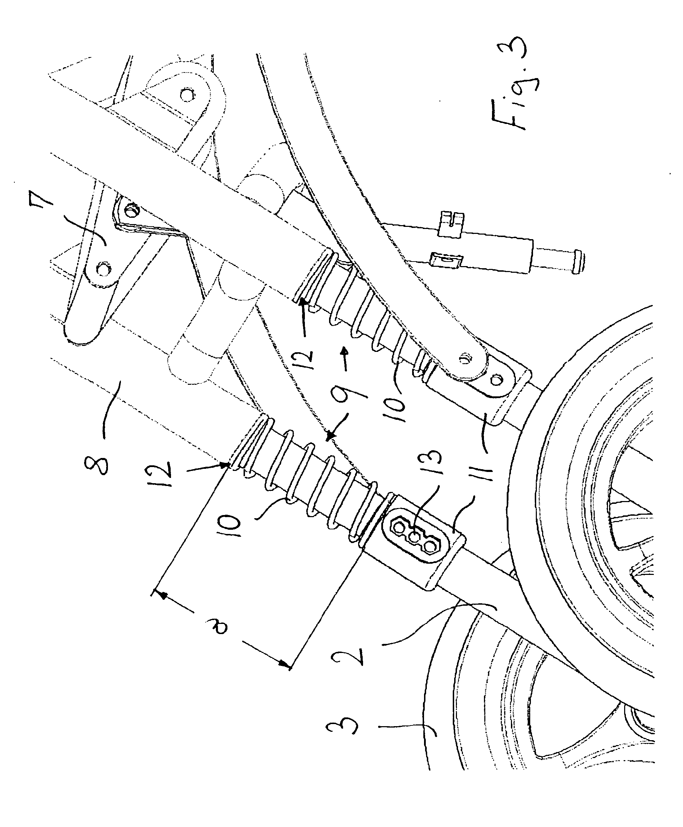

Das jeder Vorderrahmenstrebe 2 zugeordnete Federlager 9 umfasst eine Druckfeder 10, ein unteres Widerlager 11 und ein oberes Widerlager 12. Dabei stützt sich die Druckfeder 10 mit ihrem unteren Ende an dem Widerlager 11 der Vorderrahmenstrebe 2 und mit ihrem oberen Ende an dem das Widerlager 12 bildenden unteren Ende des zugeordneten Gleitrohres 8 ab. Figur 3 lässt erkennen, dass das untere Widerlager 11 als die Vorderrahmenstrebe 2 umschließende Buchse ausgebildet ist, die mit einem Lochbild 13 versehen ist, das erkennen lässt, dass dieses Widerlager 11 zur Veränderung des Längsabstandes a zwischen den beiden Widerlagern 11, 12 längsverschieblich auf der Vorderrahmenstrebe 2 angeordnet und in der jeweils gewünschten Position festlegbar ist.

An jeder Vorderrahmenstrebe 2 ist ein oberer, die maximale Ausfederung der Rahmenkonstruktion 7 begrenzender Anschlag 14 vorgesehen, bei dem es sich um die Lagerung des Schiebebügels 4 handeln kann.

Durch Längsverstellung der Widerlager 11 lässt sich die Vorspannung der Druckfedern 10 vergrößern oder aber herabsetzen, dadurch lässt sich die Federvorspannung so einstellen, dass für jedes Körpergewicht des aufzunehmenden Kindes eine optimale Stoßkompensation erzielt wird.

## Patentansprüche

1. Kinderwagen, insbesondere Rehakinderwagen, mit einem sich nach hinten oben, in einem Winkel < 90° zum Boden erstreckenden Vorderrahmen (1), der zwei nach vorne und unten gerichtete, an ihrem jeweils unteren Ende mit Vorderrädern (3) bestückte Vorderrahmenstreben (2) und an seinem hinteren oberen Ende einen Schiebebügel (4) aufweist,
und mit einem sich nach hinten unten erstreckenden Hinterrahmen (5), der an seinem oberen Ende am Vorderrahmen (1) und/oder an dessen Schiebebügel (4) festgelegt ist und an seinem hinteren unteren Ende mit Hinterrädern (6) bestückt ist,
**gekennzeichnet durch** eine als Sitzaufnahme dienende oder selbst einen Bestandteil eines Sitzes darstellende Rahmenkonstruktion (7), die an den beiden Vorderrahmenstreben (2) längsverschieblich geführt ist und sich gegenüber den Vorderrahmenstreben (2) auf zumindest einem Federlager (9) abstützt, dessen Federkraft verstellbar ist.

2. Kinderwagen nach Anspruch 1, **dadurch gekennzeichnet, dass** die Rahmenkonstruktion (7) mit je einem Gleitrohr (8) teleskopförmig auf den Vorderrahmenstreben (2) geführt ist.

3. Kinderwagen nach Anspruch 1 oder 2, **dadurch gekennzeichnet, dass** jeder Vorderrahmenstrebe (2) ein Federlager (9) zugeordnet ist, das eine Druckfeder (10) aufweist, die sich mit ihrem unteren Ende an einem Widerlager (11) der Vorderrahmenstreben (2) und mit ihrem oberen Ende an einem Widerlager (12) der Rahmenkonstruktion (17) abstützt, wobei zumindest eines dieser Widerlager (11, 12) hinsichtlich des Längsabstandes (a) zwischen den beiden Widerlagern (11, 12) verstellbar angeordnet und in der gewünschten Position fixierbar ist.

4. Kinderwagen nach Anspruch 1, 2 oder 3, **dadurch gekennzeichnet, dass** an jeder Vorderrahmenstrebe (2) ein oberer, die maximale Ausfederung der Rahmenkonstruktion (7) begrenzender Anschlag (14) vorgesehen ist.

## Claims

1. Pushchair, particularly a rehabilitation pushchair, comprising a front frame (1) extending and upward to the rear at an angle < 90 ° to the ground and having two forwardly and downwardly extending front frame struts (2) fitted with front wheels (3) at the lower ends thereof and exhibiting at their rear upper ends a sliding bar (4), and comprising a rear frame (5) which extends downward to the rear and is attached at its upper end to the front frame (1) and/or the sliding bar (4) and is provided at its rear lower end with rear wheels (6), **characterized by** a frame structure (7) which serves to accommodate a seat or is itself a component of a seat, which is adapted for longitudinal displacement along said two front frame struts (2) and bears against said front frame struts (2) via at least one spring bearing (9), the spring force of which can be varied.

2. Pushchair according to claim 1, **characterised in that** the frame structure (7) is telescopically guided along said front frame struts (2) by means of one sliding tube (8) on each strut.

3. Pushchair according to either claim 1 or claim 2, **characterised in that** each front frame strut (2) is associated with a spring bearing (9) comprising a compression 20 spring (10) which bears against an abutment (11) of the front frame struts (2) at its lower end and against an abutment (12) of the frame structure (17) at its upper end, at least one of said abutments (11, 12) being adapted for displacement in order to vary the longitudinal distance (a) between said two abutments (11, 12) and is capable of being fixed in the desired position.

4. Pushchair according to claim 1, 2, or 3, **characterised in that** there is provided on each front frame strut (2) an upper stop (14) to restrict the maximum resilience capacity of the frame structure (7).

## Revendications

1. Voiture d'enfant, en particulier voiture d'enfant pour la rééducation, comprenant un cadre avant (1) s'étendant vers l'arrière et vers le haut suivant un angle < à 90° par rapport au sol, qui présente deux jambes de cadre avant (2), dirigées vers l'avant et vers le bas dont chacune des extrémités inférieures est équipée d'une roue avant (3) et qui présente à son extrémité arrière supérieure un étrier coulissant (4) et un cadre arrière (5) s'étendant vers l'arrière et vers le bas qui est en appui fixe à son extrémité supérieure contre le cadre avant (1) et/ou contre l'étrier coulissant (4) et est équipé à son extrémité arrière inférieure de roues arrières (6), **caractérisée par** une construction de cadre (7) servant de support de siège ou constituant lui-même un composant d'un siège, qui est guidé de façon coulissante suivant la longueur aux deux jambes du cadre avant (2) et qui s'appuie par rapport aux jambes du cadre avant (2) sur au moins un palier à ressort (9), dont la force de ressort est réglable.

2. Voiture d'enfant selon la revendication 1, **caractérisée en ce que** la construction de cadre (7) est guidée de façon télescopique sur chacune des jambes de cadre avant (2) par un tube de glissement (8).

3. Voiture d'enfant selon la revendication 1 ou 2, **caractérisée en ce qu'**à chacune des jambes de cadre avant (2) est associé un palier à ressort (9) qui présente un ressort de compression (10) qui par son extrémité inférieure s'appuie contre une butée (11) des jambes de cadre avant (2) et par son extrémité supérieure s'appuie contre une butée (12) de la construction de cadre (17), l'une au moins des butées (11, 12) est disposée de façon réglable suivant la distance (a) comprise entre les deux butées (11, 12) et peut être fixée dans la position désirée.

4. Voiture d'enfant selon la revendication 1, 2 ou 3, **caractérisée en ce qu'**à chaque jambe de cadre avant (2) est prévu une surface d'appui (14) supérieure pour limiter le débattement maximum de la construction de cadre (7).
